# EUROPÄISCHE PATENTANMELDUNG

(11) **EP 1 158 193 A2**
(43) Veröffentlichungstag der Anmeldung: **28.11.2001**
(21) Anmeldenummer: 01112438.5
(22) Anmeldetag: 22.05.2001
(51) Int. Cl.: F16C 33/58, F16C 19/06

(54) **Hochgeschwindigkeits-Wälzlager, insbesondere Schrägkugellager**

(30) Priorität: 26.05.2000 DE 10026094
(71) Anmelder: Weck, Manfred, Prof. Dr.-Ing. Dr.-Ing. h.c., 52074 Aachen (DE)
(72) Erfinder: Weck, Manfred, Prof. Dr.-Ing. Dr.-Ing. h.c., 52074 Aachen (DE); Spechtel, Berthold, Dipl.-Ing, 52072 Aachen (DE)
(74) Vertreter: Kohl, Karl-Heinz

(57) **Zusammenfassung**

Bei schnell laufenden Wellen und Spindeln werden Schrägkugellager eingesetzt. Aufgrund der hohen Drehzahlen wirken hohe Aufweitungskräfte auf den Innenring (2) des Lagers. Außerdem werden dadurch die Vorspannkräfte stark erhöht. Dies führt zu einer drastischen Abnahme des Druckwinkels und einer starken Zunahme der Kontaktbelastungen. Auch die kinematischen Zustände im Wälzkontakt verschlechtern sich. Damit sich zunehmende Drehzahlen des wälzgelagerten Bauteiles nicht nachteilig auf das Wälzlager auswirken, sind die Wälzkörper (3) zur Erzielung eines von der Drehzahl des abzustützenden Drehteiles annähernd unabhängigen Kontakt- bzw. Druckwinkels an zwei einander gegenüberliegenden Kontaktpunkten (7, 8) des Außenringes (1) abgestützt. Dadurch wird eine nahezu drehzahl- und kraftunabhängige Position der Kugelbahnen relativ zum Außenring (1) erreicht. Das Wälzlager eignet sich zur Abstützung von Wellen und Spindeln, die mit hohen Drehzahlen rotieren.

## Beschreibung

Die Erfindung betrifft ein Hochgeschwindigkeits-Wälzlager, insbesondere ein Schrägkugellager, nach dem Oberbegriff des Anspruches 1.

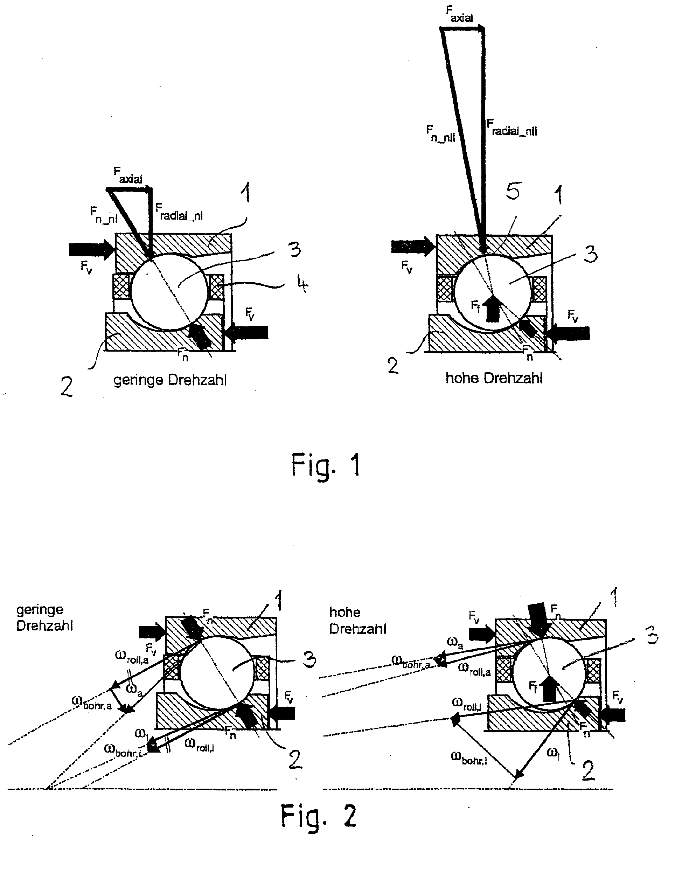

Bei schnell laufenden Wellen und Spindeln werden meist Schrägkugellager als Wälzlager eingesetzt, wie sie in den Fig. 1 und 2 dargestellt sind. Die Schrägkugellager werden in O- oder X-Anordnung axial gegeneinander angestellt. Die Druckwinkel dieser Schrägkugellager liegen zwischen 15° und 25°. Die Schrägkugellager haben einen Außenring 1 und einen Innenring 2. Zwischen ihnen befinden sich die als Kugeln ausgebildeten Wälzkörper 3, die in einem Käfig 4 gehalten sind.

Fig. 1 linkes Bild zeigt die Kraftverhältnisse im Wälzkontakt des bekannten Schrägkugellagers bei geringen Drehzahlen der Welle bzw. Spindel. Auf den Außenring 1 und den Innenring 2 wirken die gegeneinander gerichteten axialen Vorspannkräfte F_{V}. Im Kontaktbereich am Außenring 1 wirkt auf die Wälzkörper 3 die resultierende Kraft F_{n _ nl}, während im gegenüberliegenden Kontaktpunkt am Innenring 2 auf die Wälzkörper 3 die Normalkraft Fₙ wirkt, die der resultierenden Normalkraft F_{n _ nl} entgegengerichtet ist. Mit steigender Drehzahl der Welle bzw. Spindel wirken sich folgende Einflüsse nachteilig auf die inneren Belastungskräfte und damit auf die Lebensdauer des Wälzlagers aus. Da sowohl die Zentrifugalkräfte auf die Wälzkörper 3 als auch die Aufweitungskräfte auf den Innenring 2 mit der Drehzahl quadratisch ansteigen, werden die Wälzkugeln 3 in Richtung auf den Scheitelpunkt 5 des Außenringes 1 abgedrängt (Fig. 1, rechte Abbildung). Den gleichen Effekt bewirken die mit steigender Drehzahl der Welle bzw. Spindel überproportional anwachsenden Vorspannkräfte F_{V} durch das zunehmende Temperaturgefälle zwischen der Welle bzw. dem drehfest auf ihr sitzenden Innenring 2 und dem Gehäuse bzw. dem darin befestigten Außenring 1. Die Folge dieser Zusammenhänge ist eine drastische Abnahme des Druckwinkels und - damit verbunden - eine dramatische Zunahme der Kontaktbelastungen infolge der Vorspannkräfte F_{V} und der äußeren Belastungen. Wie sich aus der rechten Abbildung in Fig. 1 ergibt, nimmt die Radialkraft F_{radial _ nll} sehr stark zu, was zu einer sehr starken Erhöhung der resultierenden Normalkraft F_{n_nll} führt. Außerdem wirkt die Aufweitkraft F_{f}.

Darüber hinaus verschlechtern sich mit zunehmender Drehzahl der Wellen und Spindeln die kinematischen Zustände im Wälzkontakt der Kugeln 3 zwischen dem Außen- und dem Innenring 1, 2. In der linken Abbildung von Fig. 2 sind die Bohr-Roll-Verhältnisse am Innen- und Außenring bei kleinen Drehzahlen der Welle bzw. Spindel des bekannten Schrägkugellagers dargestellt. Die rechte Abbildung von Fig. 2 zeigt diese Verhältnisse bei einer hohen Drehzahl der Welle bzw. Spindel. Deutlich erkennbar ist, wie mit hoher Drehzahl das Bohr-Roll-Verhältnis am Innenring 2 im Vergleich zu geringen Drehzahlen der Welle bzw. Spindel (linke Abbildung in Fig. 2) stark angewachsen ist. Der Anteil der Bohrreibung ω_{bohr,i} am Innenring 2, der ebenfalls verschleißfördernd wirkt und der die Verlustreibung und damit die Temperatur bestimmt, nimmt ebenfalls zu.

Der Erfindung liegt die Aufgabe zugrunde, das gattungsgemäße Hochgeschwindigkeits-Wälzlager so auszubilden, daß sich zunehmende Drehzahlen des wälzgelagerten Bauteiles nicht nachteilig auf das Wälzlager auswirken.

Diese Aufgabe wird beim gattungsgemäßen Hochgeschwindigkeits-Wälzlager erfindungsgemäß mit den kennzeichnenden Merkmalen des Anspruches 1 gelöst.

Beim erfindungsgemäßen Hochgeschwindigkeits-Wälzlager sind die Wälzkörper an zwei einander gegenüberliegenden Kontaktpunkten des Außenringes abgestützt. Dies hat zur Folge, daß die Kontakt- bzw. Druckwinkel von der Drehzahl und den inneren Vorspannkräften zumindest annähernd unabhängig werden, d.h. zumindest weitgehend konstant bleiben. Da die Wälzkörper an den gegenüberliegenden Kontaktpunkten des Außenringes abgestützt werden, wird eine nahezu drehzahl- und kraftunabhängige Position der Kugelbahnen relativ zum Außenring erreicht.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 3: die kinematischen Verhältnisse an einer ersten Ausführungsform eines erfindungsgemäßen Hochgeschwindigkeits-Wälzlagers,
- Fig. 4: im Axialschnitt eine zweite Ausführungsform eines erfindungsgemäßen Hochgeschwindigkeits-Wälzlagers,
- Fig. 5: in perspektivischer Darstellung und im Axialschnitt einen Teil des erfindungsgemäßen Hochgeschwindigkeits-Wälzlagers gemäß Fig. 4,
- Fig. 6: in einer Darstellung entsprechend Fig. 5 das Hochgeschwindigkeits-Wälzlager gemäß Fig. 3.

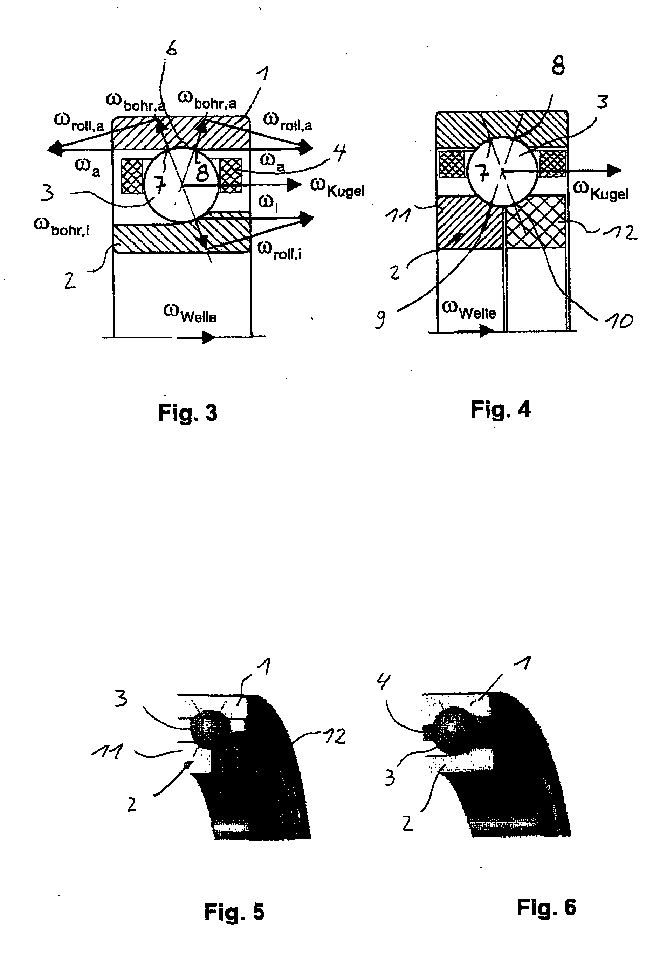

Das Hochgeschwindigkeits-Wälzlager gemäß den Fig. 3 und 6 hat den Außenring 1, den Innenring 2 sowie die Wälzkörper 3 in Form von Wälzkugeln, die im Käfig 4 aufgenommen sind. Der Innenring 2 ist einseitig angestellt. Der Außenring 1 weist an seiner Innenseite eine Kugelbahn 6 auf, die so ausgebildet ist, daß sich die Wälzkugeln 3 an zwei einander gegenüberliegenden Kontaktpunkten 7 und 8 des Außenringes 1 abstützen, wobei die Druckwinkel am Innen- und Außenring nicht gleich sein müssen. Diese Bohr-Roll-Verhältnisse am Außenring ändern sich nicht, wenn die Welle oder die Spindel mit hoher Drehzahl angetrieben wird. Auf diese Weise wird eine nahezu drehzahl- und kraftunabhängige Position der Wälzkörper 3 relativ zum Außenring 1 erreicht. Die Kontakt- bzw. Eingriffswinkel sind aufgrund der beschriebenen Geometrie des Wälzlagers so gestaltet, daß die Kontakt- bzw. Eingriffswinkel von der Drehzahl und den inneren Vorspannkräften weitgehend unabhängig sind, d.h. konstant bleiben.

Da der Innenring 2 einseitig angestellt ist, ergibt sich für die Wälzkörper 3 eine 3-Punkt-Berührung. In Fig. 3 sind die Drehgeschwindigkeit ω_{Welle} der abzustützenden Welle oder Spindel, die Drehgeschwindigkeit ω_{Kugel} der Wälzkörper 3 sowie die an den Kontaktpunkten der Wälzkörper 3 mit dem Außenring 1 und dem Innenring 2 entstehenden Drehgeschwindigkeiten ωₐ und ωᵢ dargestellt.

Der Innenring 2 kann auch so ausgebildet sein (Fig. 4 und 5), daß er die Wälzkörper 3 ebenfalls an zwei einander gegenüberliegenden Punkten 9, 10 berührt. Die Wälzkörper 3 werden somit an vier Kontaktpunkten 7 bis 10 abgestützt, so daß dieses Wälzlager ein sogenanntes Ball4Spot-Lager ist. Die Zweipunktabstützung der Wälzkörper 3 am Innenring 2 wird dadurch erreicht, daß er zweigeteilt ausgebildet ist. Diese Zweiteilung kann unterschiedlich gestaltet sein, zum Beispiel zwei symmetrische Hälften, wie in Fig. 4 dargestellt. Die Kontaktpunkte 9, 10 sind dementsprechend an der Innenringhälfte 11 und an der Innenringhälfte 12 vorgesehen. Diese Ausbildung eines Wälzlagers ermöglicht eine axiale Kraftaufnahme in beiden Achsrichtungen. Im übrigen ist dieses Wälzlager gleich ausgebildet wie die Ausführungsform nach den Fig. 3 und 6.

Die beschriebenen Wälzlager eignen sich hervorragend als Hochgeschwindigkeits-Wälzlager aufgrund der beschriebenen günstigen kinematischen Zustände und Belastungsverhältnisse. Die Hochgeschwindigkeits-Wälzlager sind Hochgenauigkeitslager, die nach der Hochgenauigkeitsklasse P4 gefertigt werden. Die Hochgeschwindigkeitslager weisen einen Druckwinkel von maximal 25° auf. Insbesondere das Hochgeschwindigkeits-Wälzlager gemäß den Fig. 4 und 5 weist keine Spaltluft im Sinne von Spiel auf. Dadurch ändert das Wälzlager im Belastungsfall seine Kinematik nicht. Es sind stets vier Kontaktpunkte 7 bis 10 vorhanden, an denen die gleichen Abwälzvorgänge stattfinden.

## Patentansprüche

1. Hochgeschwindigkeits-Wälzlager, insbesondere Schrägkugellager, mit einem Außen- und einem Innenring und Wälzkörpern, die am Außen- und Innenring anliegen,
**dadurch gekennzeichnet, daß** zur Erzielung eines von der Drehzahl eines abzustützenden Drehteiles zumindest annähernd unabhängigen Kontakt- bzw. Druckwinkels die Wälzkörper (3) an zwei einander gegenüberliegenden Kontaktpunkten (7, 8) des Außenringes (1) abgestützt sind.

2. Hochgeschwindigkeits-Wälzlager nach Anspruch 1,
**dadurch gekennzeichnet, daß** die Kontaktpunkte (7, 8) am Außenring (1) so angeordnet sind, daß die Position einer an der Innenseite des Außenringes (1) vorgesehenen Wälzkörperbahn (6) nahezu drehzahl- und kraftunabhängig ist.

3. Hochgeschwindigkeits-Wälzlager nach Anspruch 1 oder 2,
**dadurch gekennzeichnet, daß** die Wälzkörper (3) den Innenring (2) an einem Kontaktpunkt berühren.

4. Hochgeschwindigkeits-Wälzlager nach Anspruch 1 oder 2,
**dadurch gekennzeichnet, daß** die Wälzkörper (3) den Innenring (2) an zwei einander gegenüberliegenden Kontaktpunkten (9, 10) berühren.

5. Hochgeschwindigkeits-Wälzlager nach Anspruch 4,
**dadurch gekennzeichnet, daß** der Innenring aus zwei Hälften (11, 12) besteht, wobei der eine Kontaktpunkt (9) an der einen Innenringhälfte und der andere Kontaktpunkt (10) an der zweiten Innenringhälfte (12) vorgesehen ist.

6. Hochgeschwindigkeits-Wälzlager nach einem der Ansprüche 1 bis 5,
**dadurch gekennzeichnet, daß** die Wälzkörper (3) Kugeln sind.
